# EUROPEAN PATENT APPLICATION

(11) **EP 3 238 527 A1**
(43) Date of publication of application: **01.11.2017**
(21) Application number: 17165022.9
(22) Date of filing: 05.04.2017
(51) Int. Cl.: A01F 12/44, A01D 41/127, A01D 75/28

(54) **CLEANING SHOE MATERIAL DISTRIBUTOR**

(30) Priority: 28.04.2016 US 201615141093
(71) Applicant: Deere & Company, Moline, IL 61265 (US)
(72) Inventor: Bollin, Douglas, 68163 Mannheim (DE); Fuchs, Volker, 68163 Mannheim (DE)
(74) Representative: Holst, Sönke

(57) **Abstract**

A system for leveling grain on a return pan (128) of an agricultural combine (102) includes a plurality of sensors (S1, S2, S3) coupled to the return pan (128) to detect a quantity of grain on the return pan (128) at a corresponding plurality of locations; a plurality of grain steering devices (156, 158) disposed on the return pan (128) to steer grain sliding down the return pan (128); and at least one ECU (192) coupled to the plurality of sensors (S1, S2, S3) and to the plurality of grain steering devices (156, 158); wherein the at least one ECU (192) is programmed to read the plurality of sensors (S1, S2, S3), to determine a side-to-side (lateral) distribution of grain on the return pan (128), to calculate a preferred position of the grain steering devices (156, 158) that will more evenly distribute the grain on the return pan (128), and to command an actuator coupled to the grain steering devices (156, 158) to steer them to the preferred position.

## Description

### Field of the Invention

This invention relates generally to agricultural combines. More particularly it relates to grain cleaning devices of agricultural combines.

### Background of the Invention

Agricultural combines harvest crops. They cut crops from the ground, thresh the crops, separate the grain from material other than grain (MOG), clean the grain, and store the grain in a grain tank or reservoir. Eventually, they transfer the grain from the grain tank or reservoir to an accompanying vehicle such as a grain cart or grain wagon.

Agricultural combines are like factories to travel over the ground. The fields through which the combines travel are irregular. The combines tilt, roll, and pitch as they travel. Further, the rate at which they must clean the crops varies tremendously. They are not "steady-state" machines. They must be able to automatically adapt to all harvesting conditions.

It is difficult to maintain a constant, even flow of crop material (both grain and MOG) during harvesting. Axial flow combines in particular can suffer from poor lateral grain distribution depending upon (among other things) the spacing between the rotor and the concave, the way the crop is presented to the axial flow rotor, the crop conditions, and the like.

In EP2425702 (B1) a conveyor device is disclosed that is controlled by lateral slope of the combine to even the distribution of grain caused by sloping.

In US2310610, guide plates are actuated by the lateral slope of a combine to even the distribution of grain caused by the sloping.

In US4897071, an auger is controlled by the lateral slope of the combine

In US4875889, elongate guide plates are controlled by the lateral slope of the combine. In EP1958495, a grain distributor is controlled by a grain sensor.

In US9155249 the lateral distribution of crop falling on a return pan is controlled by shutters positioned below the concave and above the return pan.

In US48758892 sensors disposed on opposite sides of the combine control an actuator that steers grain guide plates on a return pan.

It is an object of this invention to provide a more constant and even crop flow through the agricultural combine.

### Summary of the Invention

In accordance with a first aspect of the invention, a system for leveling grain on a return pan of an agricultural combine, comprising a plurality of sensors coupled to the return pan to detect a quantity of grain on the return pan at a corresponding plurality of locations on the return pan and to generate signals indicative of the quantity of grain at each of these plurality of locations; a plurality of grain steering devices disposed on the return pan to steer grain sliding down the return pan; and at least one ECU coupled to the plurality of sensors and to the plurality of grain steering devices; wherein the at least one ECU is programmed to read the plurality of sensors, to determine a site-to-side distribution of grain on the return pan, to calculate a preferred position of the grain steering devices that will more evenly distribute the grain on the return pan, and to command an actuator coupled to the grain steering devices to steer them to the preferred position.

The at least one ECU may be configured to control the grain steering devices independently of each other.

The at least one ECU may be configured to (A) steer the grain steering devices in the same direction, and (B) to steer the grain steering devices in different directions depending upon a lateral distribution of grain on the return pan calculated from the signals provided to the at least one ECU from the plurality of sensors.

The at least one ECU may be configured to determine grain distribution in at least three lateral locations across a lateral width of the return pan.

The plurality of sensors may be disposed on the return pan upstream of the plurality of grain steering devices.

The grain steering devices may be paddles.

Each of the grain steering devices may be coupled to and driven by its own actuator.

Each of the grain steering devices may be supported on a corresponding pivot pin that extends through a floor of the return pan.

The plurality of sensors may comprise at least three sensors disposed laterally in a mutually spaced apart relation across the underside of the return pan to sense the quantity of grain at three corresponding spaced apart locations on the return pan.

The plurality of grain steering devices may comprise at least two paddles disposed laterally in a mutually spaced apart relation across the top surface of the return pan, wherein the grain steering devices are disposed to steer grain sliding down the return pan to the left and to the right.

The plurality of grain steering devices may be supported on pivot pins and wherein the pivot pins are coupled to the grain steering devices at an upstream end of the grain steering devices.

In accordance with another aspect of the invention, an agricultural combine comprises a threshing rotor supported in a frame of an agricultural combine wherein the threshing rotor extends generally in a direction of travel ("V") of the agricultural combine as it travels to the field harvesting crops; a concave extending about a lower portion of the threshing rotor; the return pan disposed below the concave to receive threshed grain falling from the concave; a sieve or chaffer disposed underneath the return pan to receive a flow of grain falling from a forward edge of the return pan and the system for leveling grain before grain falls onto the sieve or chaffer.

### Brief Description of the Drawings

- Fig. 1: is a side view of an agricultural combine in accordance with the present invention.
- Fig. 2: is a plan view of a grain return pan of the agricultural combine of Figure 1.
- Fig. 3: is a side view of the rotor, concave, return pan and sieve of the agricultural combine of Figures 1 and 2.

### Detailed Description of the Drawings

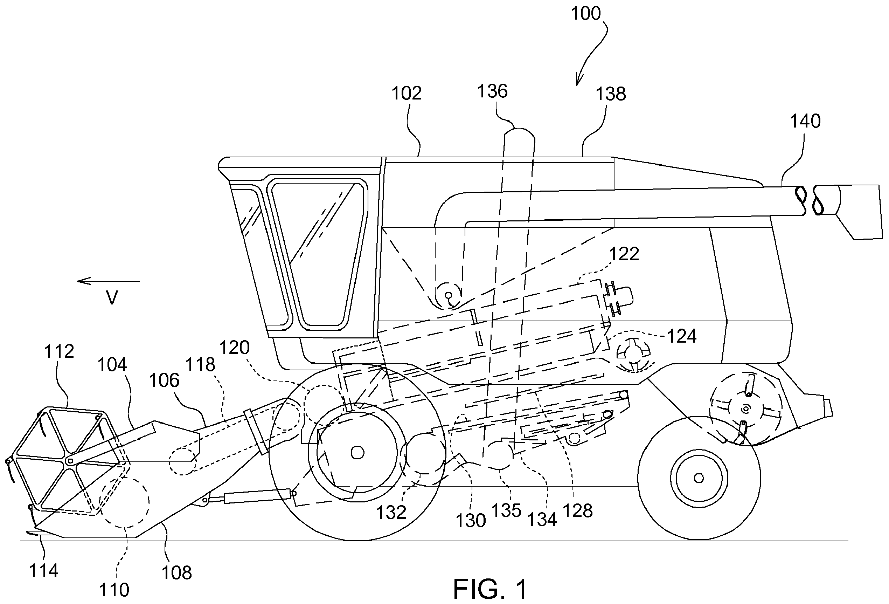

In Figure 1, an agricultural harvester 100 comprises a self-propelled agricultural combine 102 and an agricultural harvesting head 104 supported on the front of the agricultural combine 102. The agricultural harvesting head 104 is supported on a feeder house 106 which is supported on and extends forward from the front of the agricultural combine 102.

The agricultural harvesting head 104 includes a frame 108, which in turn supports a lateral conveyor 110, a reel 112, and reciprocating knife 114.

As the agricultural harvester 100 moves forward in a forward harvesting direction "V", the reciprocating knife 114 engages the stalks of plants and severs them. The severed crop material falls backward onto the floor of the agricultural harvesting head 104. The cut crop material is then engaged by the lateral conveyor 110 and is carried by that conveyor laterally inward to a central region of the agricultural harvesting head 104. The cut crop material is then pushed into the lower end of the feeder house 106, and is carried upward by an internal conveyor 118 in the feeder house. The crop is then transferred by the internal conveyor 118 to a crop accelerator 120, which directs the cut crop material between a rotor 122 that extends axially and is generally cylindrical and a concave 124 that extends about the lower half of, and is spaced slightly away from, the rotor 122. The rotor is rotated about its longitudinal axis by an internal combustion engine 126. As the rotor 122 turns with respect to the concave 124, the cut crop material is separated into grain and material other than grain (MOG). The dirty grain falls downward onto a return pan 128 which is disposed underneath the concave 124. The return pan 128 is disposed in the self-propelled agricultural combine 102 such that its forward end is lower than its rear end. As a result, the grain slides forward (i.e. in the direction of travel "V") under the force of gravity and falls onto a forward portion of a sieve and/or chaffer 130.

A cleaning fan 132 is disposed to blow air upward and through the sieve/chaffer 130. The cleaning fan 132 lifts the dirty grain and carries it upward and rearward. As the air from the cleaning fan 132 blows upward and through the dirty grain, it cleans the grain. The air carries the chaff, dust, and light vegetable matter rearward and out of the combine. The now-clean grain falls downward through apertures in the sieve/chaffer 130 and onto a floor pan 134. The clean grain falls under the force of gravity into a lateral auger 135. The clean grain is carried to one side of the combine, where it is deposited into a clean grain elevator 136. The clean grain elevator 136 carries the clean grain upward and deposits it into a grain tank 138. Grain in the grain tank 138 is subsequently removed at intervals by an unloading conveyor 140, which deposits the grain into a grain cart or grain wagon traveling alongside the agricultural harvester 100.

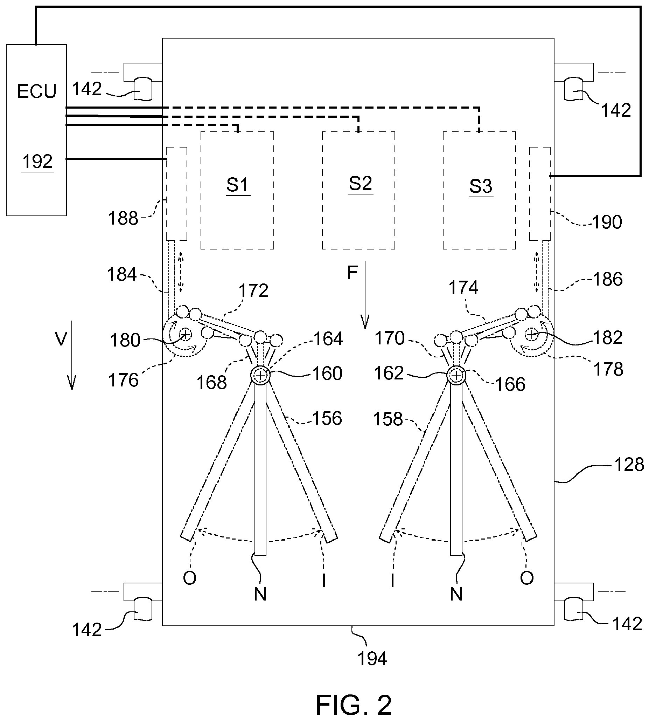

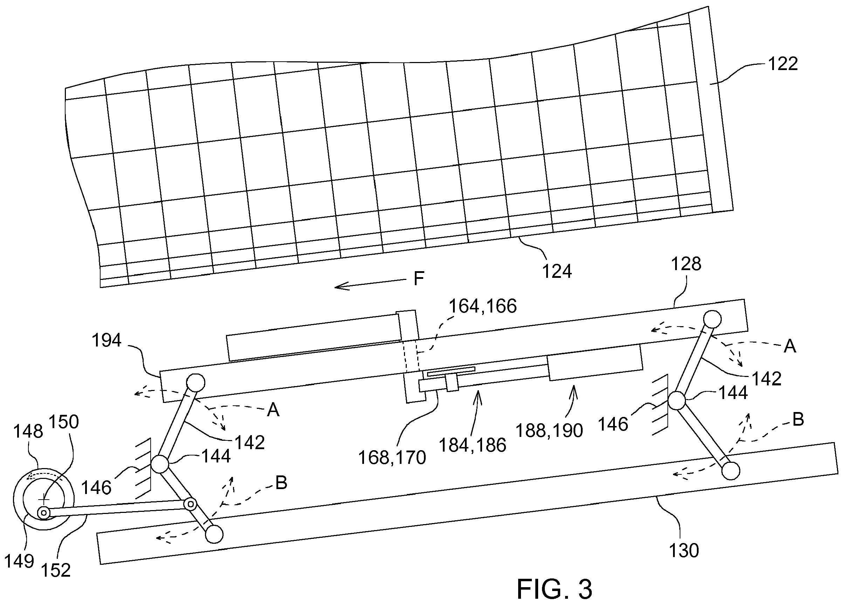

In Figures 2 and 3, the return pan 128 is supported on the upper ends of four pivoting arms 142. These pivoting arms are supported on a pivot joint 144 (Figure 3) that is supported on the chassis 146 of the agricultural combine 102. A motor 148 rotates an output shaft 149 about an axis 150. A reciprocating arm 152 is pivotally connected at its forward end to the output shaft 149 off-center from the axis 150. A rear end of the arm 152 is pivotally attached to a forward pivoting arm 142.

Thus, as the forward end of the arm 152 is driven in a circular path about the axis 150, the rear end of the arm 152 reciprocates the pivoting arm 142 in an arcuate path about the pivot joint 144. This reciprocating motion of the pivoting arm 142 in turn causes the return pan 128 to reciprocate on the upper ends of the pivoting arms 142 about the pivot joint 144 along path "A". This reciprocating motion of the pivoting arms 142 and also causes the sieve/chaffer 130 to reciprocate on the lower ends of the pivoting arms 142 about the pivot joint 144 along path "B".

The return pan 128 (Fig. 3) moves forward ("V") toward the front of the agricultural combine 102 as the sieve/chaffer 130 moves rearward toward the rear of the agricultural combine 102, and vice versa. The return pan 128 is disposed at an angle with respect to vertical such that grain on the return pan 128 flows downward and forward (i.e. in the direction "F") until it eventually falls off the forward edge 194, and downward onto the sieve/chaffer 130.

Figure 3 illustrates the left side of the agricultural combine 102 and the left side of the return pan 128 and the sieve/chaffer 130. The right side of the return pan 128 and the sieve/chaffer 130 is constructed identically, having two additional pivoting arms 142 that supporting the right side of the return pan 128 and the sieve/chaffer 130 in the same manner as shown as in Figure 2.

Two paddles 156, 158 are disposed on an upper surface of the return pan 128. The paddles 156, 158 pivot about pivots 160, 162, respectively. The paddles 156, 158 are fixed to and supported on the upper ends of pins 164, 166, respectively, which extend through the floor of the return pan 128 and are supported on the floor the return pan 128 to pivot with respect to the floor.

The lower ends of pins 157, 159 are coupled to crank arms 168, 170, respectively, such that when crank arms 168, 170 are pivoted back and forth on the underside of the return pan 128, they cause their corresponding paddles 156, 158 to pivot back and forth on the upper surface of the return pan 128.

The rearmost ends of the crank arms 168, 170 are pivotally coupled to the first ends of mechanical links 172, 174, respectively. A second end of mechanical links 172, 174 is pivotally coupled to a bell crank 176, 178, respectively. Bell cranks 176, 178 are pivotally supported on the floor of the return pan 128 to pivot about pivotal axes 180, 182, respectively. Bell cranks 176, 178 are pivotally coupled to extendable and retractable ends 184, 186 of actuators 188, 190. Thus, when the extendable and retractable ends 184, 186 of actuators 188, 190 extend and retract, they cause bell cranks 176, 178 to rotate about pivotal axes 180, 182, which causes mechanical links 172, 174 to translate left and right (in Figure 2), which causes the two paddles 156, 158 to pivot left and right.

The actuators, the bell cranks, the mechanical links, and the crank arms are all supported on the return pan 128 on the bottom of the return pan 128 to oscillate together with the return pan 128.

The actuators 188, 190 may be electrically, hydraulically, or pneumatically actuated. They are preferably electrically actuated and are coupled to and driven by ECU 192. The ECU 192 is also coupled to sensors S1, S2, and S3 and is configured to read signals from those sensors. The sensors S1, S2, S3 are impact sensors of the piezoelectric type. They generate signals indicating the individual impacts of material falling from the concave 124 on to the return pan 128 in the region of the sensors themselves. The magnitude and frequency of the signals is indicative of the amount of material falling upon the return pan 128.

The sensors S1, S2, and S3 are disposed in a spaced-apart relationship extending in a lateral direction (i.e. generally perpendicular to the forward direction of travel "V") across the bottom of the return pan 128 to which they are fixed. As individual kernels of grain fall on the upper surface of the return pan, they impact the top surface of the pandan cause the sensor to generate an electrical pulse that is processed and communicated to the ECU 192 in a conventional manner. The sensors S1, S2, S3 are therefore configured to sense the lateral distribution of grain across the return pan 128. For example, the more impacts and the larger the impacts on a first sensor versus a second sensor indicates a greater amount of material falling on the return pan 128 in the vicinity of the first sensor.

The ECU 192 comprises a digital microprocessor, RAM, and ROM as well as driver circuits for reading and conditioning the signals from sensors S1, S2, S3, and generating signals to drive the actuators 188, 190. The ECU 192 is configured to read the sensors S1, S2, S3, and determine the lateral distribution of grain across the return pan 128. The ECU 192 is further configured to control actuators 188, 190 in response to its calculated lateral distribution of grain across the return pan 128.

If, for example, sensor S1 indicates a greater quantity of grain on the portion of the return pan (128) above sensor S1 than the quantity of grain above sensor S2 and sensor S3, the ECU 192 is configured to move paddle 158 from its neutral position ("N") toward a more inward position ("I"). This has the effect of distributing some of the grain on the left-hand side of the return pan 128 (see Figure 2) more towards the central region of the return pan 128. As a result, by the time the clean grain reaches forward edge 194 of the return pan 128, the grain is more evenly distributed. In this mode of operation, the ECU 192 would not signal paddle 158 to move away from its neutral position ("N")., The ECU 192 can independently control separate grain distribution devices (the paddles) on the upper surface of the return pan 128 in response to a sensed lateral distribution of grain.

As a further example of this independent control, if the ECU 192 determines that sensor S3 indicates a greater quantity of grain on the portion of the return pan (128) above sensor S3 than the quantity of grain above sensor S1 and sensor S2, the ECU 192 is configured to move paddle 158 from its neutral position ("N") toward a more inward position ("I") while keeping paddle 158 in its neutral ("N") position. As in the prior example, this independent control of the two actuators shifts grain from the right side of the return pan 128 (see Figure 2) more towards the central region of the return pan 128. This will also lead to a more even grain distribution across the forward edge 194 of the return pan 128.

As a further example of this independent control, if the ECU 192 determines that sensor S1 and sensor S3 indicate a greater quantity of grain on the portion of the return pan (128) above sensor S1 and sensor S3 than above sensor S2, the ECU is configured to move paddle 156 and paddle 158 toward their respective more outward positions ("O"). This has the effect of distributing some of the grain in a central region (around sensor S2) of the return pan 128 more towards the left and the right edges of the return pan 128.

As yet another example, if the ECU 192 determines that sensor S1 indicates a greater quantity of grain upon the return pan 128 above sensor S1 than the quantity of grain indicated above sensor S2, and that the sensor S2 indicates a greater quantity of grain on the return pan 128 above sensor S2 than the quantity of grain indicated above sensor S3, then the ECU 192 will control the actuators to steer grain across the return pan 128 from left to right. The ECU 192 will move paddle 156 more towards its inward position ("I"), thus steering grain on the left side of the return pan 128 to the right and more toward the central region of the return pan 128. The ECU will also move paddle 158 more towards its outward position ("O"), the steering grain from the central region of the return pan 128 to the right and more towards the right side of the return pan 128. This causes the grain to be more evenly distributed across the return pan 128.

In a similar manner, if the ECU 192 determines that sensor S2 indicates a greater quantity of grain upon the return pan 128 above sensor S2 than the quantity of grain indicated above sensor S1 and also greater than the quantity of grain indicated above sensor S3, the ECU 192 will control the actuators to steer grain from the central region of the return pan 128 to both the left side of the return pan 128 in the right side of the return pan 128. The ECU 192 will control the actuator 188 to steer the paddle 156 more towards its outward position ("O") and will control the actuator 190 to steer the paddle 158 more towards its outward position ("O"). This movement of the paddles causes grain to be spread from the central region of the return pan 128 more towards the left and right sides, thereby more evenly distributing the grain across the return pan 128.

Thus, the ECU 192 controls a plurality of grain steering devices (the paddles) located on the floor of the return pan 128 such that each of the plurality of grain steering devices is moved independently of the others. Further, the ECU is configured to independently and simultaneously control the grain steering devices to steer grain in the same direction (i.e. both steering grain to the left or both steering grain to the right) or to steer grain in opposing directions (i.e. one steering grain to the left and one steering grain to the right).

The invention (or inventions) described herein is not limited to the particular embodiments disclosed above and in the associated figures. The invention (or inventions) is defined by the claims. The embodiments disclosed herein merely illustrate at least one working example of the invention. Other embodiments of the invention are also possible. Other arrangements of the invention are possible.

For example, the embodiment described in the herein had three sensors S1, S2, S3 that sense the lateral distribution of grain across the width of the return pan 128. In another arrangement there may be may be more sensors, such as four, five, six, or even more. By providing additional sensors across the lateral width of the return pan 128, the resolution of the height of the grain falling onto the return pan 128 can be determined with greater accuracy, and thus the control can be made more precise.

As another example, only two grain steering devices (the paddles 156, 158) are described and illustrated herein. More grain steering devices can be provided to provide even more precise lateral steering of the grain. These, too, would be coupled to the ECU 192 and would be controlled in a similar fashion to more evenly distribute grain across the return pan 128. As another example, instead of a single ECU 192, multiple ECUs 192 may be provided that work together and are connected to the actuators and the sensors to operate as described above. Individual functions described above as provided by one ECU 192 can be distributed among the plurality of ECUs to collectively perform these functions.

## Claims

1. A system for leveling grain on a return pan (128) of an agricultural combine (102), comprising:
a plurality of sensors (S1, S2, S3) coupled to the return pan (128) to detect a quantity of grain on the return pan (128) at a corresponding plurality of locations on the return pan (128) and to generate signals indicative of the quantity of grain at each of these plurality of locations;
a plurality of grain steering devices (156, 158) disposed on the return pan (128) to steer grain sliding down the return pan (128); and
at least one ECU (192) coupled to the plurality of sensors (S1, S2, S3) and to the plurality of grain steering devices (156, 158);
wherein the at least one ECU (192) is programmed to read the plurality of sensors (S1, S2, S3), to determine a site-to-side distribution of grain on the return pan (128), to calculate a preferred position of the grain steering devices (156, 158) that will more evenly distribute the grain on the return pan (128), and to command an actuator coupled to the grain steering devices (156, 158) to steer them to the preferred position.

2. The system of Claim 1, wherein the at least one ECU (192) is configured to control the grain steering devices (156, 158) independently of each other.

3. The system of Claim 2, wherein the at least one ECU (192) is configured to (A) steer the grain steering devices (156, 158) in the same direction, and (B) to steer the grain steering devices (156, 158) in different directions depending upon a lateral distribution of grain on the return pan (128) calculated from the signals provided to the at least one ECU (192) from the plurality of sensors (S1, S2, S3).

4. The system of Claim 1, wherein the at least one ECU (192) is configured to determine grain distribution in at least three lateral locations across a lateral width of the return pan (128).

5. The system of Claim 1, wherein the plurality of sensors (S1, S2, S3) are disposed on the return pan (128) upstream of the plurality of grain steering devices (156, 158).

6. The system of Claim 1, wherein the grain steering devices are paddles (156, 158).

7. The system of Claim 6, wherein each of the grain steering devices (156, 158) is coupled to and driven by its own actuator (188, 190).

8. The system of Claim 7, wherein each of the grain steering devices (156, 158) is supported on a corresponding pivot pin (164, 166) that extends through a floor of the return pan (128).

9. The system of Claim 1, wherein the plurality of sensors comprises at least three sensors disposed laterally in a mutually spaced apart relation across an underside of the return pan (128) and fixed to the underside of the return pan (128) to sense the quantity of grain at at least three corresponding spaced apart locations on the return pan.

10. The system of Claim 9, wherein the plurality of grain steering devices (156, 158) comprises at least two paddles disposed laterally in a mutually spaced apart relation across a top surface of the return pan (128), wherein the grain steering devices (156, 158) are disposed to steer grain sliding down the return pan (128) to the left and to the right.

11. The system of Claim 10, wherein the plurality of grain steering devices (156, 158) are supported on pivot pins (164, 168) and wherein the pivot pins are coupled to the plurality of grain steering devices (156, 158) at an upstream end of the grain steering devices (156, 158).

12. An agricultural combine (102) comprising:
a threshing rotor (122) supported in a frame (146) of an agricultural combine (102) wherein the threshing rotor (122) extends generally in a direction of travel ("V") of the agricultural combine (102) as it travels to the field harvesting crops;
a concave (124) extending about a lower portion of the threshing rotor (122);
the return pan (128) disposed below the concave (124) to receive threshed grain falling from the concave (124);
a sieve or chaffer (130) disposed underneath the return pan (128) to receive a flow of grain falling from a forward edge (194) of the return pan (128) and
the system for leveling grain of Claim 1 to level grain on the return pan (128) before grain falls onto the sieve or chaffer (130).
